# EUROPEAN PATENT APPLICATION

(11) **EP 1 918 566 A2**
(43) Date of publication of application: **07.05.2008**
(21) Application number: 07020786.5
(22) Date of filing: 24.10.2007
(51) Int. Cl.: F02M 25/07

(54) **Engine exhaust gas recirculation (EGR) valve**

(30) Priority: 31.10.2006 US 555262
(71) Applicant: International Engine Intellectual Property Company, LLC., Warrenville, IL 60555 (US)
(72) Inventor: Melhem, Bashar Y., Orland Park, IL 60467 (US); Balekai, Priyankar S., Forest Park, IL 60130 (US)
(74) Representative: Kuhnen & Wacker

(57) **Abstract**

A valve and intake manifold assembly for an EGR system of a combustion engine includes a pocket (122) formed in the intake manifold (112), the pocket (122) including at least one seat formed at an interior surface of the pocket (122). Also included is an upper valve housing that is attachable to an exhaust conduit of the engine and a valve shaft extending from the upper valve housing and axially moveable. The valve shaft (32) includes at least one valve member extending generally perpendicularly from the valve shaft (32), where the at least one valve member sealingly engages the valve seat on the interior surface of the pocket (122).

## Description

### BACKGROUND OF THE INVENTION

The present invention relates generally to engine exhaust gas recirculation (EGR) systems. More specifically, the present invention relates to a valve for an EGR system.

Engine exhaust gas recirculation is a known technique for reducing oxides of nitrogen in products of combustion that are exhausted from an internal combustion engine to the atmosphere. A typical EGR system comprises an EGR valve that is controlled in accordance with engine operating conditions to regulate the amount of engine exhaust gas that is recirculated to the intake flow entering the engine so as to limit the combustion temperature, and further, to reduce the formation of oxides of nitrogen during combustion. To the extent that exhaust gas is introduced into the flow entering the engine, it displaces air that would otherwise enter the engine.

The EGR valve is the main emissions control component in the EGR system. The EGR valve is located at an intake manifold and is connected between an EGR conduit and the engine. Conventionally, the EGR valve has a housing, which is inserted into an intake manifold pocket, and opens a small exhaust gas recirculation passageway between the EGR conduit and intake manifold to allow a metered amount of exhaust flow to the engine.

The conventional EGR valve is a double-poppet valve having a housing with at least one inlet and at least one outlet for flow of the exhaust gases through the valve. The valve housing is inserted into an intake manifold pocket. A valve shaft is axially moveable and has two valves extending perpendicularly therefrom. The valve has first and second valve seats on an inside surface of the housing to sealingly disengage and engage with the first and second valve portions to open and close the valve, respectively.

In some cases, despite the conventional valve being completely open, there may be too much pressure reduction in the recirculation passageway, and too much restriction of the exhaust gas flow to the engine. When the engine does not receive enough of the recirculated exhaust gas flow, the combustion temperature and the formation of oxides may not be adequately impeded to the extent desired.

Further, the EGR valve is an additional component that contributes to weight and cost of the overall EGR system.

Thus, there is a need for an EGR valve that reduces the pressure drop and the flow restriction to the intake manifold.

There is also a need for an EGR valve that has fewer components, costs less, and reduces the weight of the overall EGR system.

### BRIEF SUMMARY OF THE INVENTION

The above-listed needs are met or exceeded by the present valve and intake manifold assembly for an EGR system of a combustion engine. The assembly includes a pocket formed in the intake manifold, the pocket including at least one seat formed at an interior surface of the pocket. Also included is an upper valve housing that is attachable to an exhaust conduit of the engine and a valve shaft extending from the upper valve housing that is axially moveable. The valve shaft includes at least one valve member extending generally perpendicularly from the valve shaft, where the at least one valve member sealingly engages the valve seat on the interior surface of the pocket.

An alternate embodiment of valve and intake manifold assembly for an EGR system of a combustion engine includes a pocket formed in the intake manifold between an exhaust conduit and the engine. Also included is an upper valve housing that is attachable to the exhaust conduit of the engine, and a valve shaft extending from the upper valve housing that is axially moveable. An exhaust gas recirculation passageway for the flow of exhaust gases through the valve is provided, where the passageway is partially defined by the upper housing and partially defined by the pocket, and where the passageway is defined by the pocket substantially along the length of the valve shaft.

A valve for an EGR system of a combustion engine and configured to be mounted in an interior surface of a pocket of an intake manifold is provided. The valve includes an upper valve housing, and a valve shaft extending from the upper valve housing that is axially moveable. The valve shaft includes at least one valve member extending generally perpendicularly from the valve shaft, where a valve member sealingly engages the interior surface of the pocket.

An intake manifold for an EGR system of a combustion engine and configured to receive a valve having at least one valve member and a valve shaft includes a generally cylindrical pocket for receiving the valve. A valve seat is disposed at an interior surface of the pocket, where the valve seat is configured to sealingly engage with a valve member.

### BRIEF DESCRIPTION OF THE SEVERAL VIEWS OF THE DRAWINGS

FIG. 1 is a partial section view of a prior art EGR valve having an upper housing and a lower housing disposed in a valve pocket of an intake manifold; and

FIG. 2 is a partial section view of an EGR valve of the present invention having an upper housing and an exposed valve portion, and disposed in a valve pocket of an intake manifold.

### DETAILED DESCRIPTION OF THE INVENTION

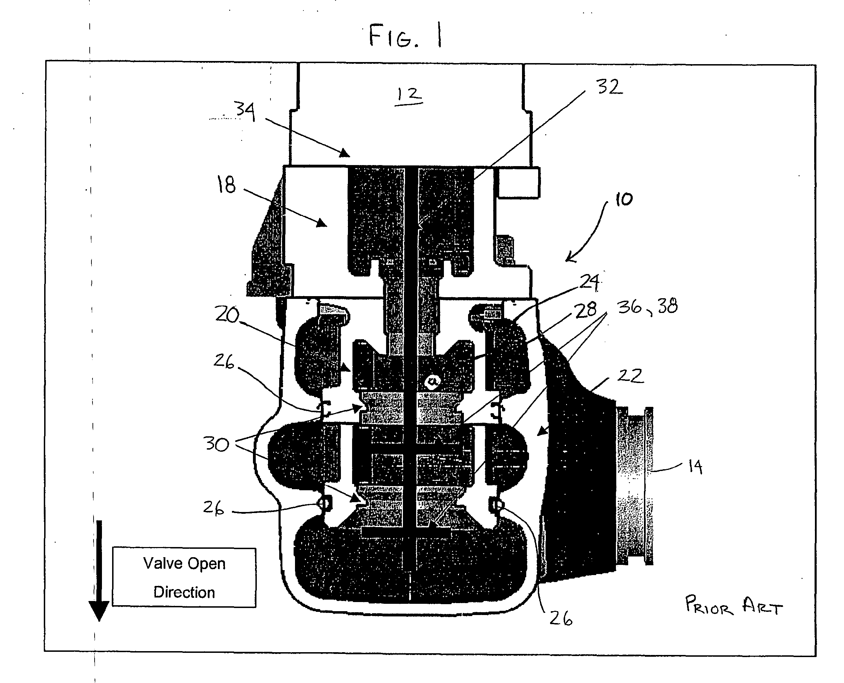

Referring now to FIG. 1, a prior art EGR valve is indicated generally at 10 and is located at an intake manifold 12 between an EGR conduit 14 and an internal combustion engine (not shown). The EGR valve 10 selectively opens and closes an exhaust-gas recirculation passageway 16, which is in fluid communication with and located between the EGR conduit and the engine. The EGR valve opens the exhaust-gas recirculation passageway 16 to allow a metered amount of exhaust flow to the engine.

The EGR valve 10 has a poppet-type structure and includes an upper housing 18 and a lower housing 20, which is inserted into an intake manifold pocket 22. The lower housing 20 is attached to an inside surface 24 of the intake manifold pocket 22 at a plurality of contact points 26.

On an inner peripheral surface 28 of the lower valve housing 20, and disposed at a regular vertical interval, are valve seats 30. A valve shaft 32 is axially movably assembled into the upper valve housing 18 with a valve motor 34. First and second valve members 36, 38 extend generally perpendicularly from the valve shaft 32 and are spaced from each other at the same interval as the valve seats 30.

When the valve shaft 32 is moved axially downward (as indicated in FIG. 1), the valve members 36, 38 move away from the valve seats 30 and exhaust flow can travel through the exhaust-gas recirculation passageway 16. When the valve shaft 32 is moved axially upward, the valves sealingly engage the valve seats 30 to prevent exhaust flow through the exhaust-gas recirculation passageway 16.

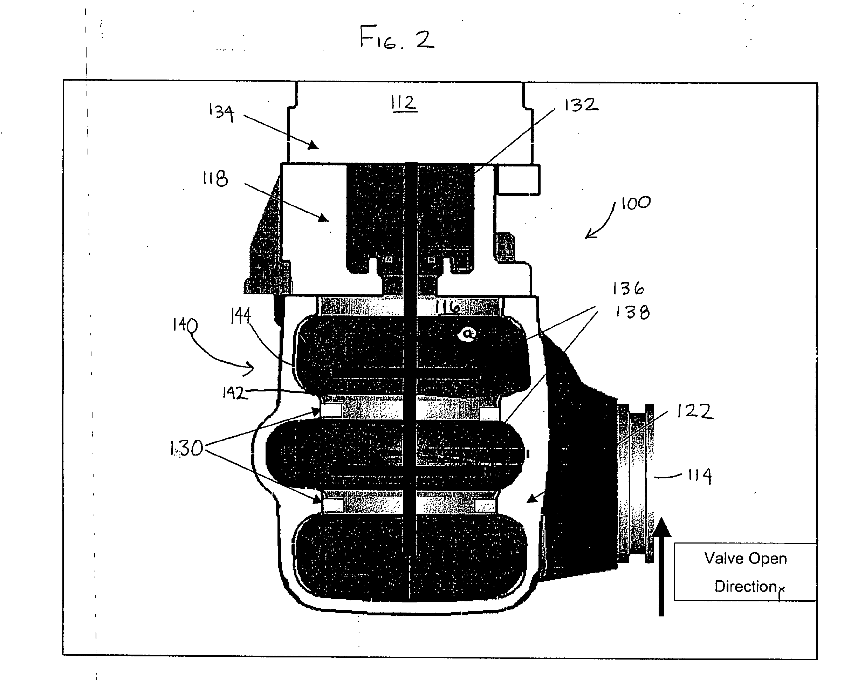

Referring now to FIG. 2, an EGR valve of the present invention is indicated generally at 100. Similar to the EGR valve 10, the EGR valve 100 is disposed in the intake manifold 112 and selectively opens and closes an exhaust-gas recirculation passageway 116, which is in fluid communication with and located between the EGR conduit 114 and the engine (not shown). The exhaust-gas recirculation passageway 116 is preferably partially defined by an upper valve housing 118 and partially defined by an intake manifold pocket 122. While the present invention should not be limited to a specific embodiment of EGR valve 100, a preferred valve for an EGR system is described below.

The EGR valve 100 has a poppet-type structure. While FIG. 2 depicts a double-poppet valve, it is contemplated that a single-poppet valve, or a valve having any number of poppets can be used. A valve shaft 132 is axially movably assembled into the upper valve housing 118 with a valve motor 134. First and second valve members 136, 138 are preferably disc-shaped and extend generally perpendicularly from the valve shaft 132. The first and second valve members 136, 138 are spaced from each other at a set interval.

Unlike the prior art valve 10, the EGR valve 100 does not have a lower housing that defines the exhaust gas recirculation passageway 116, but instead has an exposed valve portion 140. Without a lower housing on the EGR valve 100, the exhaust gas recirculation passageway 116 is defined by the intake manifold pocket 122, and has a larger cross-sectional area "a" relative to an EGR valve 10 having a lower housing that defines the exhaust gas recirculation passageway. Without a lower housing, there is less restriction of recirculated exhaust gas through the EGR valve 100.

In the present valve 100, the intake manifold pocket 122 defines the exhaust gas recirculation passageway 122 substantially along the length of the valve shaft 132. Preferably, the intake manifold pocket 122 defines the exhaust gas recirculation passageway 122 along at least two-thirds the length of the valve shaft 132.

The exposed valve portion 140 of the EGR valve 100 is inserted directly into an intake manifold pocket 122. The intake manifold pocket 122 is preferably generally cylindrical with areas of increased and decreased diameter. At least one, and preferably two valve seats 130 are disposed at an interior surface 142 of the intake manifold pocket 122, preferably at an area of decreased diameter. The valve seats 130 are preferably spaced from each other at the same set interval as the valve members 136, 138.

When the valve shaft 132 is moved axially upward (as indicated in FIG. 2 in the direction towards the upper housing 118), the valve members 136, 138 disengage from the valve seats 130. Exhaust flow can travel through the exhaust-gas recirculation passageway 116 when the valve members 136, 138 are open. When the valve shaft 132 is moved axially downward (in the direction away from the upper housing 118), the valve members 136, 138 sealingly engage the valve seats 130 to prevent exhaust flow through the exhaust-gas recirculation passageway 116.

The intake manifold 112 is preferably formed of aluminum, and the intake manifold pocket 122 preferably includes an insert 144 that forms at least the valve seat 130. The insert 144 is preferably formed of stainless steel and is preferably provided at at least a portion of the interior surface 142 of the manifold pocket 122. The insert 144 is configured to provide less friction resistance for the valve 100. The insert 144 is preferably formed into the intake manifold pocket 122 by pressing the stainless steel material into the casting die of the intake manifold pocket. It is also contemplated that the intake manifold pocket 122 can be provided with a friction resistant material without the use of a separate insert 144, such as by providing a lining or treating the aluminum, among other methods.

With the present valve 100 and intake manifold 112 assembly, there will be a reduced pressure drop and reduced flow restriction through the valve, which will allow more recirculated exhaust gases to enter the engine. Further, although the intake manifold pocket 122 is preferably provided with a stainless steel insert 144, by eliminating a valve housing, there is reduced cost and weight to the overall EGR system.

While particular embodiments of the present valve 100 and intake manifold 112 assembly have been shown and described, it will be appreciated by those skilled in the art that changes and modifications may be made thereto without departing from the invention in its broader aspects and as set forth in the following claims.

## Claims

1. A combination valve and intake manifold assembly for an EGR system of a combustion engine, said assembly comprising:
a pocket formed in the intake manifold, said pocket including at least one seat formed at an interior surface of said pocket;
an upper valve housing that is attachable to an exhaust conduit of the engine;
a valve shaft extending from said upper valve housing and axially moveable, said valve shaft including at least one valve member extending generally perpendicularly from said valve shaft, wherein said at least one valve member sealingly engages said valve seat on said interior surface of said pocket.

2. The assembly of claim 1 further comprising one of an insert and lining in said pocket forming said valve seat, wherein said insert and lining are made of a low friction material.

3. The assembly of claim 2 wherein said low friction material is stainless steel.

4. The assembly of claim 1 wherein when said valve shaft is moved axially in the direction towards said upper housing, said at least one valve member disengages from said at least one valve seat.

5. The assembly of claim 4 wherein said pocket is generally cylindrical with areas of increased and decreased diameter, and wherein said at least one valve seat is disposed at said interior surface at an area of decreased diameter.

6. The assembly of claim 1 wherein said valve has a poppet configuration.

7. A combination valve and intake manifold assembly for an EGR system of a combustion engine, said assembly comprising:
a pocket formed in said intake manifold between an exhaust conduit and the engine;
an upper valve housing that is attachable to said exhaust conduit of the engine;
a valve shaft extending from said upper valve housing and axially moveable; and
an exhaust gas recirculation passageway for the flow of exhaust gases through the valve, wherein said passageway is partially defined by said upper housing and partially defined by said pocket, wherein said passageway is defined by said pocket substantially along the length of said valve shaft.

8. The assembly of claim 7 further comprising one of an insert and lining in said pocket forming a valve seat, wherein said insert and lining are made of a low friction material.

9. The assembly of claim 8 wherein said low friction material is stainless steel.

10. The assembly of claim 7 further comprising a valve seat disposed on an interior surface of said pocket, and the assembly further comprising at least one valve member extending generally transverse to said valve shaft, wherein said passageway is sealed by the engagement of said at least one valve member with said valve seat.

11. A valve for an EGR system of a combustion engine and configured to be mounted in an interior surface of a pocket of an intake manifold, said valve comprising an upper valve housing, and a valve shaft extending from said upper valve housing and axially moveable, said valve shaft including at least one valve member extending generally perpendicularly from said valve shaft, wherein said at least one valve member sealingly engages the interior surface of the pocket.

12. The valve of claim 11 further comprising a poppet configuration.

13. The valve of claim 11 wherein said valve shaft is circumscribed by a valve housing along less than half of the length of said valve shaft.

14. The valve of claim 11 wherein a majority of said valve shaft is exposed from a valve housing.

15. The valve of claim 11 wherein said upper valve housing circumscribes less than a third of said valve shaft.

16. An intake manifold for an EGR system of a combustion engine and configured to receive a valve having at least one valve member and a valve shaft, said intake manifold comprising a generally cylindrical pocket for receiving the valve, and at least one valve seat disposed at an interior surface of said pocket, wherein said valve seat is configured to sealingly engage with the at least one valve member.

17. The intake manifold of claim 16 wherein said at least one valve seat is formed by an insert formed of friction resistant stainless steel.

18. The intake manifold of claim 16 wherein said intake manifold is formed of aluminum.

19. The intake manifold of claim 16 wherein said pocket defines an exhaust gas recirculation passageway for the flow of exhaust gases through the valve substantially along the length of the valve shaft.

20. The intake manifold of claim 16 wherein said at least one valve seat is disposed at said interior surface at an area of decreased diameter.
